# EUROPÄISCHE PATENTSCHRIFT

(11) **EP 0 950 583 B1**
(45) Veröffentlichungstag und Bekanntmachung des Hinweises auf die Patenterteilung: **19.06.2002**
(21) Anmeldenummer: 99106999.8
(22) Anmeldetag: 09.04.1999
(51) Int. Cl.: B60R 21/32

(54) **Verfahren zur Anpassung einer Auslöseschwelle von Insassenschutzeinrichtungen**
Method for adapting a triggering threshold of passenger safety devices
Procédé pour adapter le seuil de déclenchement de dispositifs pour la sécurité de passagers

(30) Priorität: 18.04.1998 DE 19817334
(43) Veröffentlichungstag der Anmeldung: 20.10.1999
(73) Patentinhaber: Conti Temic microelectronic GmbH, 90411 Nürnberg (DE)
(72) Erfinder: Fendt, Günter, 86529 Schrobenhausen (DE); Baur, Richard, 85276 Pfaffenhofen (DE); Bischoff, Michael, 85111 Adelschlag (DE); Schwehr, Stephan, Dr., 90408 Nürnberg (DE); Steiner, Peter, Dr., 86529 Schrobenhausen (DE); Steurer, Helmut, 85302 Junkershofen (DE)
(74) Vertreter: Kolb, Georg

(56) Entgegenhaltungen:
- EP-A- 0 728 624
- WO-A-95/05608
- DE-A- 4 220 270
- US-A- 3 778 823

## Beschreibung

Die Erfindung betrifft ein Verfahren zur Anpassung einer Auslöseschwelle von Insassenschutzeinrichtungen gemäß dem Oberbegriff des Patentanspruches 1.

Ein derartiges Verfahren ist bspw. aus der EP 0 728 624 A2 zu entnehmen. Als predictive crash sensor, kurz Precrash-Sensor wird ein Radar-System vorgeschlagen, welches in einem Fahrzeugumkreis befindliche Ziele erfaßt und die im Oberbegriff genannten Größen Relativabstand und -geschwindigkeit bestimmt. In Abhängigkeit von diesen Größen wird dann die Auslöseschwelle variiert, die mit dem Beschleunigungssignal oder einem daraus abgeleitetes Signal, insbesondere dem Beschleunigungsintegralsignal, verglichen wird. Entsprechend kommt es bereits bei niedrigeren Beschleunigungs- oder Beschleunigungsintegralsignalen zu einer Auslösung der Insassenschutzeinrichtung. Leider erweisen sich die Precrash-Sensoren derzeit als äußerst störanfällig und nicht für alle Verkehrssituationen geeignet. Insbesondere bei sehr geringen Abständen zwischen dem Fahrzeug und dem zielobjekt (bspw. beim Überholen, bei geringer Spurbreite oder beim Fahren an einer Leitplanke) oder bei unüblichen Objekten (bspw. einem Pappkarton u.ä.) kann es zu Fehleinschätzungen kommen. In einer solchen Situation wird die Auslöseschwelle so weit herabgesetzt, daß bereits eine leichte Berührung beider Objekte, starke Bremsmanöver des Fahrzeugs oder gar Erschütterungen von der Fahrbahn ausreichen, um die Insassenschutzeinrichtung auszulösen. Eine solche Auslösung ist zu diesem Zeitpunkt zum Schutz des Insassen noch nicht erforderlich, führt aber zu einer Behinderung der Fahrers, der das Fahrzeug in dieser Gefahrensituation nicht mehr sicher lenken kann.

Darüber hinaus ist aus der DE 42 20 720 A1 eine Insassenschutzeinrichtung zu entnehmen, bei der zwei räumlich beabstandet nacheinander liegende verformungsempfindliche Sensoren vorgesehen werden, mittels denen während eines Unfalls Informationen über dessen Stärke und Geschwindigkeit gewonnen und gegebenenfalls auch die Auslöseschwellen herabgesetzt werden.

Die beiden verformungsempfindlichen Sensoren können erst mit dem Eintritt des Aufpralls aktiv werden, sind daher Aufprallsensoren und keine Precrashsensoren, wenngleich durch die räumlich beabstandete Anordnung durch den am weitesten an der Außenwandung des Fahrzeuges angeordneten Sensors eine "Vorwarnfunktion" realisierbar ist. Neben dem abweichenden Sensorikkonzept zu Precrashsensoren ist insbesondere der Zeitabstand zwischen der Vorwarnung und dem spätestmöglichen Auslösezeitpunkt für die Insassenschutzeinrichtungen viel kürzer, so daß Precrashsensoren deutliche Sicherheitsvorteile bieten.

Aufgabe der Erfindung ist es, ein sichereres Verfahren zur Anpassung einer Auslöseschwelle von Insassenschutzeinrichtungen anzugeben.

Diese Aufgabe wird durch die kennzeichnenden Merkmale des Patentanspruchs 1 gelöst. Durch einen Aufprallsensor kann die Anpassung der Auslöseschwelle zusätzlich abgesichert werden. Nur beim Vorliegen eines Precrash- und eines Aufprallsignals wird die Auslöseschwelle herabgesetzt.

Vorzugsweise wird dem Aufprallsensor dabei eine Mindeststärke des Aufpralls vorgegeben. Als ein besonders bevorzugter Aufprallsensor ergibt sich ein faseroptischer Belastungssensor, der an wenigstens einer für Unfallsituationen typischen Aufprallfläche vorgesehen ist.

Bei einem Aufprall wirkt eine Kraft auf die Lichtleitfaseranordnung ein und führt zu einer Veränderung der am Lichtaustrittsende von einem Lichtmesser zu messenden Lichtleistung, in dessen Abhängigkeit das Aufprallsignal gesendet wird.

Die Erfindung wird nachfolgend anhand von Ausführungsbeispielen und Figuren näher erläutert. Kurze Beschreibung der Figuren:
- Figur 1: Darstellung eines Ablaufes eines Verfahrens zur Anpassung einer Auslöseschwelle,
- Figur 2: Blockschaltbild eines Insassenschutzsystems zur Durchführung des Verfahrens.

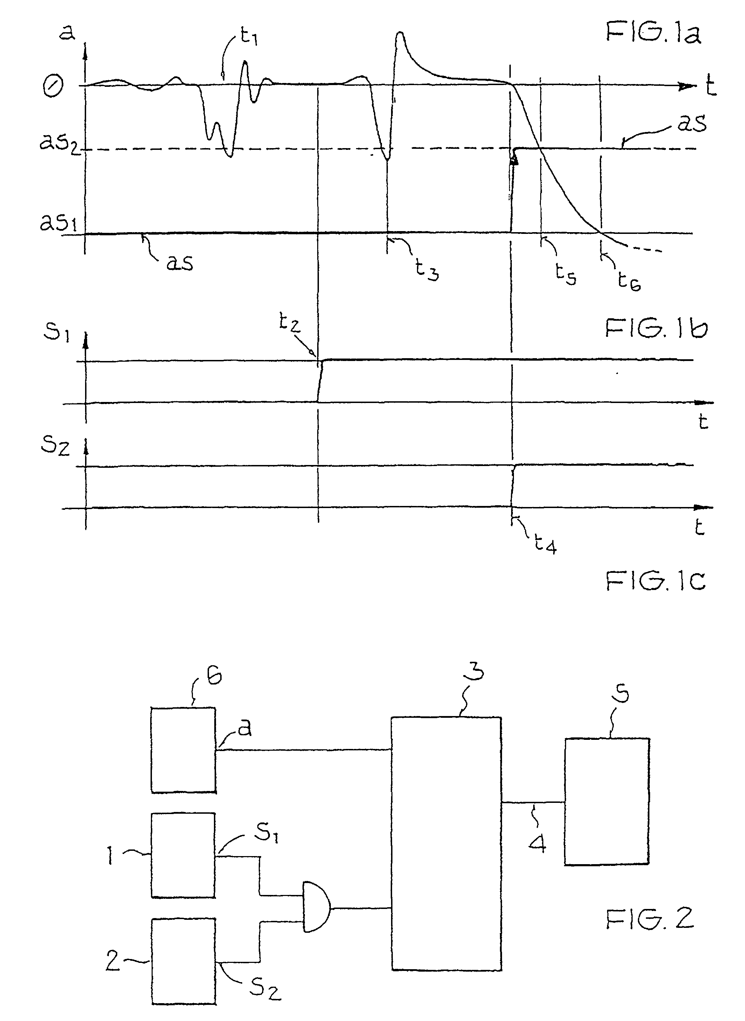

Die Figur 1 zeigt einen möglichen zeitlichen Ablauf des Verfahrens zur Anpassung einer Auslöseschwelle. in Figur 1a wird das sich zeitlich verändernde Beschleunigungssignal a, sowie die sich anpassende Auslöseschwelle as dargestellt. In den Figuren 1b und 1c werden dazu zusätzlich zeitsynchron das Precrash-Signal S1 und das Aufprallsignal S2 dargestellt.

Zum Zeitpunkt t1 weist das Beschleunigungssignal eine Störung, beispielsweise durch Erschütterung auf. Eine Auslöseschwelle as, die dauerhaft auf dem niedrigen Auslöseschwellwert as2 gehalten würde, käme bereits bei derart geringen Beschleunigungssignalen zur Auslösung. zum Zeitpunkt t2 erkennt der Precrash-Sensor, der beispielsweise als ein Radarsystem ausgeführt ist, ein Objekt im sicherheitskritischen Nahbereich des Fahrzeuges und setzt das Precrash-Signal S1. im herkömmlichen System gemäß dem Stand der Technik würde bereits jetzt die Auslöseschwelle as von ihrem ursprünglichen Wert as1 auf as2 herabgesetzt. Zum Zeitpunkt t3 tritt wieder ein signifikantes Beschleunigungssignal auf, welches beispielsweise auf ein Bremsmanöver oder eine leichte Berührung mit dem Objekt im Nahbereich zurückzuführen ist. Herkömmliche Verfahren mit einer bereits zu diesem Zeitpunkt herabgesetzten Auslöseschwelle as würden auslösen und so dem Fahrer die Möglichkeit nehmen, die Gefahrensituation durch gezielte Lenkbewegung noch zu entschärfen. Das erfindungsgemäße Verfahren setzt daher, wie aus Figur 1 deutlich zu erkennen, noch nicht aufgrund des Precrash-Signals S1 allein die Auslöseschwelle as herab. Erst wenn im Zeitpunkt t4 auch der Aufprallsensor das Aufprallsignal S2 sendet, wird die Auslöseschwelle as von ihrem Ausgangswert as1 auf die niedrigere Schwelle as2 herabgesetzt. Das bei dem Aufprall gleichzeitig ansteigende Beschleunigungssignal a wird somit deutlich früher, nämlich zum Zeitpunkt t5 zur Auslösung führen anstelle dem Zeitpunkt t6, wenn die ursprüngliche Auslöseschwelle as1 beibehalten worden wäre. Das Aufprallsignal S2 sichert daher das Precrash-Signal S1 zusätzlich ab.

Figur 2 zeigt ein Blockschaltbild eines Insassenschutzsystems zur Durchführung des Verfahrens die Zentraleinheit 3 erfaßt dabei das vom Beschleunigungssensor 6 gelieferte Beschleunigungssignal und verarbeitet dies gemäß der im Stand der Technik bekannten Verfahren, integriert dieses insbesondere auf. Das Beschleunigungssignal bzw. das Beschleunigungsintegralsignal werden in der Zentraleinheit 3 mit einer Auslöseschwelle verglichen, welche durch das Precrash-Signal S1 und das Aufprallsignal S2 bestimmt wird. Dazu ist die Zentraleinheit 3 über ein UND-Glied mit dem Precrashsensor 1 sowie dem Aufprallsensor 2 verbunden. Mit der Zentraleinheit 3 ist über die Auslöseleitung 4 dann zumindest eine Insassenschutzeinrichtung 5 verbunden. Selbstverständlich können in einem Insassenschutzsystem auch mehrere Aufprallsensoren 2 und/oder Insassenschutzeinrichtungen 5 vorgesehen werden. Als besonders bevorzugt erweist sich dabei ein Aufprallsensor, bei dem bei einem Aufprall eine Kraft auf eine Lichtleitfaseranordnung einwirkt, so daß es zu einer Veränderung der am Lichtaustrittsende von einem Lichtmesser zur messenden Lichtleistung kommt. Besonderer Vorteil eines solchen faseroptischen Aufprallsensors ist die hohe Signalgeschwindigkeit durch das Licht. Um diesen effektvoll auszunutzen, wird die Lichtleitfaseranordnung von der Zentraleinheit 3 aus bis an eine für Unfallsituationen typischer Aufprallfläche verlegt. Lichtsender und Lichtmesser sind daher der Zentraleinheit 3 unmittelbar zugeordnet. Das vom Lichtmesser in Abhängigkeit von der gemessenen Lichtleistung erzeugte Aufprallsignal wird dann in der Zentraleinheit 3 mit dem Precrash-Signal S1 logisch verknüpft.

Neben der Schnelligkeit der optischen Signalübertragung ist für ihre Anwendung im Bereich der Insassenschutzsysteme im Kraftfahrzeug auch ihre Stromfreiheit entscheidend, da sie selbst bei Zerstörung der Lichtleitfaseranordnung es so nicht zu Kurzschlüssen kommen kann.

## Patentansprüche

1. Verfahren zur Anpassung einer Auslöseschwelle (as) von Insassenschutzeinrichtungen (5), insbesondere in Kraftfahrzeugen, bei dem die auftretenden Beschleunigungen mittels eines Beschleunigungssensors (6) gemessen und dessen Beschleunigungssignal (a) oder ein daraus abgeleitetes Signal, insbesondere das Beschleunigungsintegralsignal, mit der Auslöseschwelle (as) verglichen wird, wobei
zumindest ein Precrash-Sensor (1) vorgesehen ist, welcher die Änderung der Relativgeschwindigkeit und/oder des Relativabstandes von Objekten innerhalb eines vorgegebenen Nahbereichs der Fahrzeugumgebung registriert, und,
falls die vom Precrash-Sensor (1) erfaßte Änderung der Relativgeschwindigkeit zumindest einen vorgegebenen Schwellwert über und/oder der Relativabstand einen vorgegebenen Schwellwert unterschreitet, ein Pre-Crash-Signal (S₁) erzeugt wird, und,
wenn ein Pre-Crash-Signal (S₁) auftritt, die Auslöseschwelle (as2) herabgesetzt wird,
**dadurch gekennzeichnet, daß**
wenigstens ein Aufprallsensor (2) vorgesehen ist, der bei einem Aufprall eines Objektes ein Aufprallsignal (S₂) sendet, und,
die Auslöseschwelle (as) nur herabgesetzt wird, wenn auf das Auftreten eines Pre-Crash-Signals (S₁) das Aufprallsignal (S₂) folgt.

2. Verfahren zur Anpassung einer Auslöseschwelle (as) von Insassenschutzeinrichtungen (5) nach Anspruch 1, **dadurch gekennzeichnet, daß** der Aufprallsensor (2) nur dann ein Aufprallsignal (S₂) sendet, wenn der Aufprall des Objektes eine vorgegebene Stärke erreicht.

3. Verfahren nach einem der vorangehenden Ansprüche, **dadurch gekennzeichnet, daß** als Aufprallsensor (2) ein faseroptischer Belastungssensor an wenigstens einer für Unfallsituationen typischen Aufprallfläche vorgesehen ist, der eine seilförmige Lichtleitfaseranordnung mit zwei Seilenden und einem ein Licht aussendender Lichtsender an einem Lichteintrittsende und einem mit einer Auswerteeinheit verbundenen Lichtmesser an einem Lichtaustrittsende aufweist, bei dem bei einem Aufprall eine Kraft auf die Lichtleitfaseranordnung einwirkt und zu einer Veränderung der am Lichtaustrittsende von dem Lichtmesser zu messenden Lichtleistung führt und bei einer signifikanten Veränderung der Lichtleistung das Aufprallsignal (S₂) sendet.

## Claims

1. A method for adjusting a trigger threshold (as) of occupant protection devices (5), in particular in motor vehicles, where the accelerations occurring are measured by means of an acceleration sensor (6) and where the acceleration signal (a) measured by this acceleration sensor, or a signal derived therefrom, in particular the acceleration integral signal, is compared with the trigger threshold (as), with
at least one precrash sensor (1) being provided which registers the change in relative speed and/or the relative spacing of objects within a predetermined neighboring region, and
if the change in relative speed detected by the precrash sensor (1) exceeds at least one predefined threshold value and/or if the relative spacing falls below a predetermined threshold value, a precrash signal (S₁) is generated, and
if a precrash signal (S₁) is detected, the trigger threshold (as2) is lowered,
**characterised in that**
at least one impact sensor (2) is provided, which transmits an impact signal (S₂) in the event of an object impact, and
the trigger threshold (as) is lowered only if the occurence of a precrash signal (S₁) is followed by the impact signal (S₂).

2. A method for adjusting a trigger threshold (as) of occupant protection devices (5) according to Claim 1 **characterised in that** the impact sensor (2) only transmits an impact signal (S₂) if the object impact reaches a predefined strength.

3. A method according to one of the preceding claims, **characterised in that** a fibre optic load sensor is provided as an impact sensor (2) in at least one typical impact surface for accident situations, and comprises a cable-type optical fibre arrangement with two cable ends and a light transmitter emitting light at a light input end and a photometer connected to an evaluation unit at a light output end, where in the event of an impact a force acts upon the optical fibre arrangement and leads to a change in the light output to be measured by the photometer at the light output end, and transmits the impact signal (S₂) in the event of a significant change in the light output.

## Revendications

1. Procédé d'adaptation d'un seuil de déclenchement (as) de dispositifs de sécurité de passagers (5), en particulier dans des véhicules, dans lequel les accélérations apparaissant sont mesurées à l'aide d'un capteur d'accélération (6) et dont le signal d'accélération (a) ou un signal dérivé de celui-ci, en particulier le signal intégré d'accélération, est comparé au seuil de déclenchement (as),
au moins un capteur de précollision (1) étant prévu, qui enregistre la variation de la vitesse relative et/ou de l'écart relatif d'objets à l'intérieur d'une zone rapprochée prescrite de l'environnement du véhicule, et,
au cas où la modification détectée par le capteur de précollision (1) de la vitesse relative dépasse au moins une valeur de seuil prescrite et/ou l'écart relatif tombe au-dessous d'une valeur de seuil prescrite, un signal de précollision (S1) est généré, et
lorsqu'un signal de précollision (S1) apparaît, le seuil de déclenchement (as2) est abaissé, **caractérisé en ce que**
au moins un capteur de choc (2) est prévu, qui émet un signal de choc (S2) dans le cas d'un choc d'un objet, et,
le seuil de déclenchement (as) n'est abaissé que lorsque après l'apparition d'un signal de précollision (S1) succède le signal de signal de choc (S₂).

2. Procédé d'adaptation d'un seuil de déclenchement (as) de dispositifs de sécurité de passagers (5) selon la revendication 1, **caractérisé en ce que** le capteur de choc (2) n'émet un signal de choc (S2) que lorsque le choc de l'objet atteint une intensité prescrite.

3. Procédé selon l'une des revendications précédentes, **caractérisé en ce qu'**en tant que capteur de choc (2) est prévu un détecteur de charge à fibre optique sur au moins une surface de choc typique pour des situations d'accident, qui présente un dispositif à fibre conductrice de lumière filiforme avec deux extrémités de fil et un émetteur de lumière émettant une lumière à une extrémité d'entrée de lumière et un photomètre relié à une unité d'évaluation à une extrémité d'émergence de lumière, dans lequel, dans le cas d'un choc, une force s'exerce sur le dispositif à fibre conductrice de lumière et conduit à une modification de la puissance lumineuse à mesurer par le photomètre à l'extrémité d'émergence de lumière et, dans le cas d'une modification significative de la puissance lumineuse, émet le signal de choc (S₂).
